Europäisches Patentamt

European Patent Office

Office européen des brevets

(19)

(11) **EP 1 298 540 A1**

(12) **EUROPEAN PATENT APPLICATION**

(43) Date of publication:
**02.04.2003 Bulletin 2003/14**

(51) Int Cl.⁷: **G06F 17/30**, G06N 7/02

(21) Application number: **01308260.7**

(22) Date of filing: **27.09.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **BRITISH TELECOMMUNICATIONS public limited company**
**London EC1A 7AJ (GB)**

(72) Inventor: **The designation of the inventor has not yet been filed**

(74) Representative: **Lloyd, Barry George William et al**
**BT Group Legal Services,**
**Intellectual Property Department,**
**8th Floor, Holborn Centre,**
**120 Holborn**
**London EC1N 2TE (GB)**

(54) **Method of customising terms**

(57)     Embodiments of the present invention are concerned with providing a method of customising preferences, and arise from the realisation that the match between data returned in response to user requirements could be improved if the user requirements can be quantified, and if the means used to identify data in response to the user requirements can be adapted to suit different users.

Accordingly, embodiments provide a method of modifying a term for use in selection of items. An item may be a type of data, a type of data analysis method, a type of product, a service and such like. A term may be a user preference, such as "cheap" or "simple", and is defined over a range of values. The method comprises the following steps:

(i) selecting two or more items that match the term;
(ii) receiving an indicator representative of which of the selected items is a best match with a prespecified requirement; and
(iii) modifying the range of values defining the term in accordance with at least one aspect of the best match item.

Fig 8

**Description**

The present invention relates to a method of customising terms, and is particularly, but not exclusively, suited for use in improving automatic selection of goods and services based on the terms.

When a user selects a tool to analyse data, the user has his or her perception of how a tool should perform. When a user selects a product, the user has some idea of the quality, durability he or she wants from the product. These perceptions are subjective and particular to individual users.

Typically whoever performs data analysis on a data set is not an expert in analysis, methods per se: he understands the application area, or domain, in which the data has been collected, but is not intimate with the workings of the analysis methods themselves. As a result, selection of a method that suits his individual levels of knowledge and understanding can be extremely difficult.

In the retail area, a similar situation exists. Users are often not familiar with producers, import or storage conditions, and how these characteristics relate to quality of the goods, so that they select goods based on reputation, hearsay, popular opinion and their limited previous experience. Individually, or collectively, such gauges can be unrepresentative of the user's individual idea of quality and the like.

According to a first aspect of the present invention there is provided a method of modifying a definition of a term for use in selection of items, where the term is defined over a range of values. The method comprises the steps of

    selecting two or more items that match the term;

    receiving an indicator representative of which of the selected items is a best match with a prespecified requirement; and

    modifying the range of values in accordance with at least one aspect of the best match item.

An item could be an interest, a data analysis method, or a product type, and a term could be a description of the item. Thus, for example in one embodiment, the method could be applied to modify a definition of the term "cheap", which is used in selection of an item such as a restaurant.

Preferably the method further includes the steps of, for each of the selected items, evaluating a match between the range of values in the term and the range of values in a corresponding term of the selected items, and ranking the selected items in accordance with the evaluated match.

Thus, continuing with the "cheap" and "restaurants" example, if the selected items include MacDonalds and Kentucky Fried Chicken, these restaurants would have a range of values that defines their "cheapness". This range of values is compared against the default range of values corresponding to the term "cheap", and whichever of the restaurants corresponds most closely to the default range of values for "cheap" is ranked the highest.

Additionally the method includes identifying whether an item other than that ranked highest is a better match with the prespecified requirement, and modifying the range of values in accordance with at least one aspect of the identified best match item. The step of modifying the range of values includes comparing the range of values of the term with the range of values in the corresponding term of the identified best match item in order to evaluate an error value; and using the error value to modify the range of values in the term.

The prespecified requirement may comprise an indication from a user. The user may indicate that MacDonalds is a better indication of a "cheap" restaurant than Kentucky Fried Chicken, even though Kentucky Fried Chicken may correlate better with the default range of values defining "cheap". Thus the range of values defining "cheap" is modified in accordance with the range of values corresponding to MacDonalds, thereby generating a bespoke range of values defining "cheap" for this user.

Embodiments of the invention therefore allow a term to be customised in accordance with user feedback.

In a second embodiment, the method further includes the steps of using the range of values in the term to identify one or more rules relating thereto, the rules comprising at least one fuzzy set that relates the term to one or more item parameters;

    processing the or each identified rule in order to identify instances of item parameters therefrom;

    comparing the or each instances of item parameters processed from the rule with instances of item parameters associated with selectable items in order to select the said two or more items that match the term;

    evaluating a degree of match between the term and each of the selected items; and

    ranking the items in accordance with the evaluated match.

In cases where an item is a data analysis method, an item parameter may be a data analysis characteristic. Examples of data analysis characteristics (item parameters) are skill required, prior knowledge required, modelling capability, customisability and adaptability. For this example a term may be a user characteristic description corresponding to a data analysis method, such as simplicity, user friendliness and interpretability, among others.

For this example, a rule could relate user characteristics to data analysis characteristics (e.g. **If** *simplicity* is *high* **then** *customisability* is *low),* so that, for this example rule, the item parameter is *customisability* and the instance of this item parameter is *low.* Selectable items can be data analysis methods - for example, linear regression, neural networks etc., so that the comparison step involves comparing whatever is stored against *customisability* for each of these methods. A degree of match is thence dependent on how the instances (corresponding to linear regression, neural network) of the item parameter *customisability* compares with the instance evaluated from the rule (here *low*), and is evaluated accordingly.

The method then includes identifying whether an item other than that ranked highest is a better match with the prespecified requirement, and modifying the range of values in accordance with at least one aspect of the identified best match item. As per the first embodiment, the prespecified requirement could involve a user indicating which of the methods matches his requirements most closely. Thus if the user were to indicate that the method linear regression meets his definition of a *simple* model more closely, but the data analysis method neural network is ranked the highest, the range of values corresponding to the term *simple* is modified in accordance with data relating to the method linear regression.

Preferably the step of modifying the range of values includes comparing the item parameters associated with the indicated best match item with the item parameters associated with the item ranked highest according to the evaluated match in order to evaluate an error value; and inputting the error value and the identified rule to an adjustment algorithm to modify the range of values in the term.

Thus, continuing with the example based on the term *simple,* the item parameters (or data analysis characteristics) corresponding to the method linear regression are compared with those corresponding to the method neural network, in order to generate an error value. The rule (**If** *simplicity* is *high* **then** *customisability* is *low)* and the error value are then input to the adjustment algorithm. A suitable adjustment algorithm involves a Neuro-fuzzy method, which is described in more detail below.

The terms data analysis, model, soft computing, fuzzy system, neuro-fuzzy system, and variable, are used in the description. These are defined as follows:

"data analysis": A data analysis method creates a model from data. That model can then be used for prediction, clustering or description; e.g. a neural network is a data analysis method (while it is learning) and a model (when it has finished learning and is applied to new data). Thus data analysis is modelling, i.e. the process of creating a model.

"model": the term model is widely used in data analysis, with different meanings. For the purposes of this description, a model is a postulated structure, or an approximation to a structure, which could have led to some observed phenomenon or data. For example, in order to explain the observation that objects fall towards the centre of the earth when they are dropped, we construct a model of gravitation.

Empirical models are a type of model that describes relationships without basing them on an underlying theory. That means the model merely captures the correlations between input and output, and usually it gives us some means to estimate the probability that the output (i.e. prediction, classification etc) is correct. Thus in data analysis, empirical models are built, using observed data to determine such correlations.

"soft computing": Soft computing is an approach to simulate human reasoning, which makes use of human tolerance of uncertainty and vagueness to obtain inexpensive solutions that are easy to apply to, or use with, new data, and are easy to use, operate, and maintain in applications. Fuzzy systems, neural networks, evolutionary computation and probabilistic reasoning are considered to be soft computing techniques.

"fuzzy systems": Fuzzy systems are systems that are based on fuzzy rules. A fuzzy rule comprises one or more fuzzy sets, e.g. If x is *small* then y is *approximately zero;* here *small* and *approximately zero* are fuzzy sets. Fuzzy systems can model smooth transitions between states and thus avoid counterintuitive results that can occur when boundaries of crisp states are crossed. Fuzzy systems are also known as neural fuzzy networks and/or fuzzy networks.

"neuro-fuzzy systems": A neuro-fuzzy system refers to combinations of neural networks and fuzzy systems, which in combination create a fuzzy system from data by some kind of (heuristic) learning method based on neural network learning procedures.

"variable": A variable is an item of data in a data set; it is also referred to as an attribute.

Further aspects and advantages of the present invention will be apparent from the following description of preferred embodiments of the invention, which are given by way of example only and with reference to the accompanying drawings, in which

Figure 1 is a schematic diagram showing a conventional client-server configuration arranged to perform data analysis;

Figure 2 is a schematic diagram of components of a data analyser according to a first embodiment of the present invention;

Figure 3 is a flow diagram showing steps involved in capturing user requirements according to embodiments of the invention;

Figure 4 is a flow diagram showing steps involved in identifying data analysis methods that satisfy user requirements, according to embodiments of the invention;

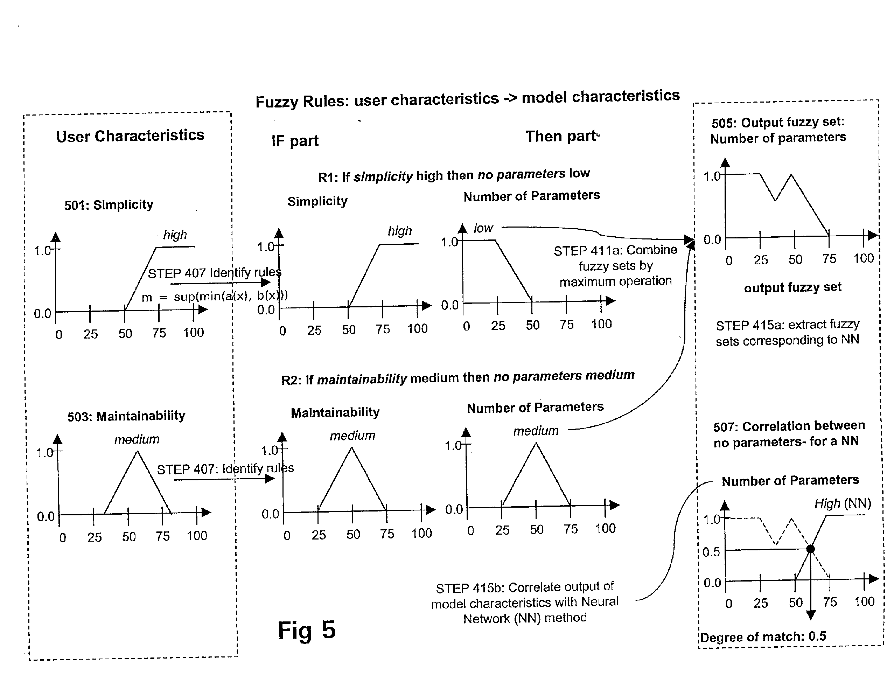

Figure 5 is a flow diagram showing further aspects of identifying data analysis methods that satisfy user requirements, according to embodiments of the invention;

Figure 6 is a schematic diagram illustrating relationship of a wrapper program and an external analysis tool, according to embodiments of the invention;

Figure 7 is a flow diagram showing steps involved in building a model in accordance with one or more data analysis methods identified in embodiments of the invention;

Figure 8 is a flow diagram showing steps involved in gathering and applying user feedback to customise user preferences, according to a first embodiment;

Figure 9 is a flow diagram showing steps involved in gathering and applying user feedback to customise user preferences, according to a second embodiment; and

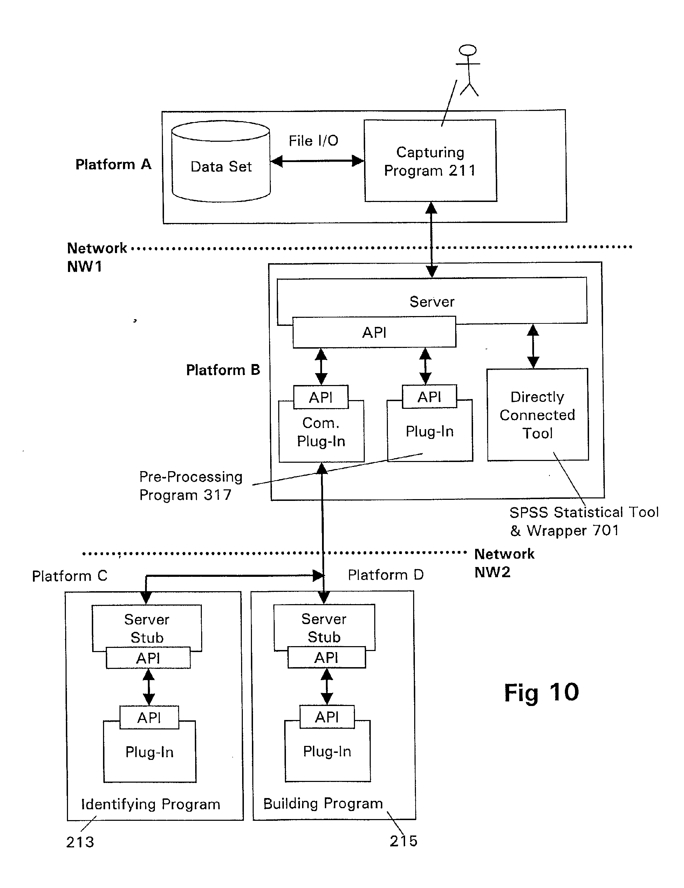

Figure 10 is a schematic block diagram showing an alternative arrangement of the data analyser shown in Figure 2.

Overview of operating environment of embodiments of the invention

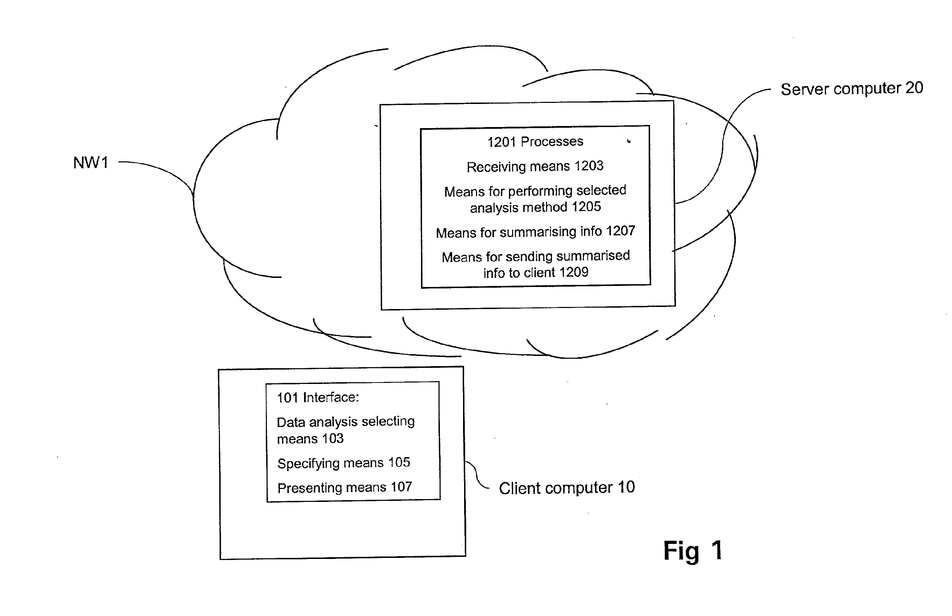

Figure 1 shows a generally conventional arrangement of computer systems 10, 20 configured to process data in accordance with user requirements. The computer systems 10, 20 are arranged in a conventional client-server relationship, wherein a first computer 10 acts as a client to a second computer 20 and communication occurs over a network NW1. In a conventional manner, data to be analysed is input to one or more processes 1201 running on the server computer 20 via an interface 101 running on the client computer 10.

The interface 101 typically includes means 103 for receiving user requests, which, for the case of a user performing data analysis, includes a user specifying data to be analysed and analysis method(s) to be applied to the data. The processes 1201 include means 1203 for receiving the user requests, which for the present example, includes data indicative of the selected analysis method together with the data to be analysed. In addition, the processes include means 1205 for processing data in accordance with the user requests, which, for the present example, includes performing the selected analysis method. The processes 1201 further include means 1207 for summarising data generated as a result of the processing, and sending the results to the user.

The interface 101 includes means 107 for presenting the summarised results to the user.

Embodiments of the invention arise from the realisation that the match between data returned in response to user requirements could be improved if the user requirements are quantified, and if the means used to identify data in response to the user requirements can be adapted to suit different users. Preferably such means should be expressed in a form that is tangible to the users, as, if the user understands the effect of his requirements on the methods, the user can provide feedback, and customise aspects of the process in accordance with individual requirements.

It is known to use fuzzy logic to describe concepts and instances of parameters that are not easily expressed with crisp rules. Specifically, in the field of data analysis, aspects of model creation can be specified using fuzzy expressions. For example, a first user may specify that he wants data to be used to build an accurate model, while a second user may specify that he wants data to be used to build an approximate model. Thus, for the model characteristic accuracy, the first user will be assigned a fuzzy set *high*, and the second user will be assigned a fuzzy set *low.* Now suppose a third user specifies that he also wants an accurate model. Both the first and third users will be presented with models that are generally considered to be accurate, because they fit within the definition of *highly* accurate. However, if the first user's perception of an accurate model differs to that of the second user's perception of an accurate model, then one, or both, of the users will receive models that do not satisfy their individual perception of an accurate model.

Embodiments are thus concerned with providing a means of interacting with the user in order to customise such fuzzy logic statements in accordance with user requirements, and modifying the fuzzy logic statement in accordance with quantifiable parameters that can be derived from user feedback. Features of the invention are exemplified by embodiments relating to data analysis, database querying and product selection.

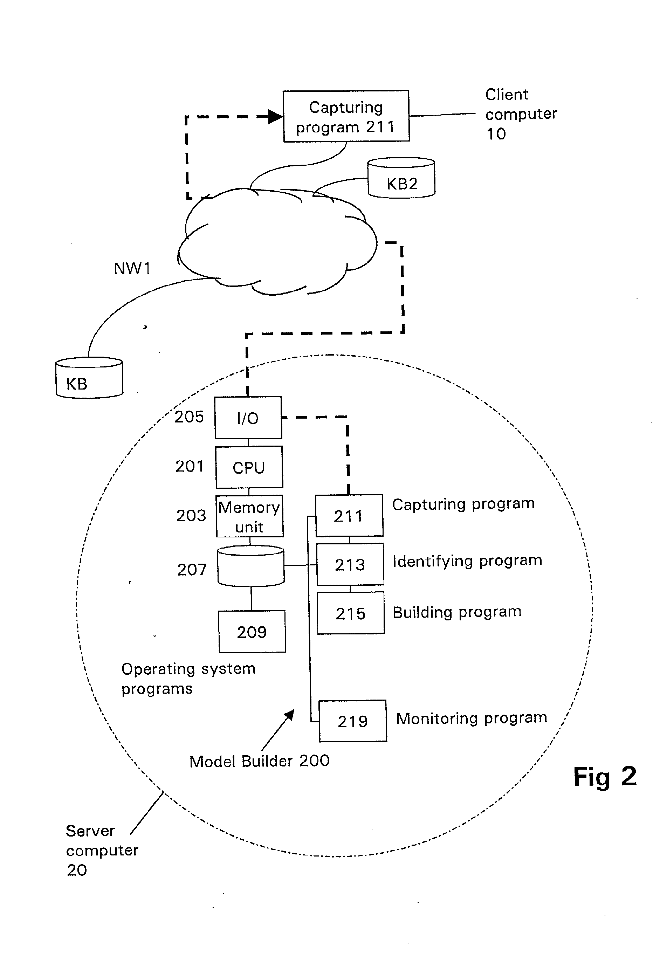

Referring to Figure 2, an embodiment of the invention will now be discussed in more detail.

Figure 2 shows a server computer 20 comprising a central processing unit (CPU) 201; a memory unit 203; an input/output device 205 for connecting the server computer 20 to the client computer 10 via the network NW1; storage 207; and a suite of operating system programs 209, which control and coordinate low level operation of the server computer 20. Such a configuration is well known in the art.

Generally embodiments of the invention are referred to as a profiler 200, and comprise at least some of programs 211, 213, 215, 219. These programs are stored on storage 207 and are processable by the CPU 201.

The programs include a program 211 for capturing user requirements, a program 213 for identifying one or more methods, or items, that match data captured by the capturing program 211, and a program 219 for modifying interpretation of user requirements in accordance with user feedback captured by the capturing program 211. In addition, the profiler 200 may include a program 215 for processing data in accordance with the identified methods. It will be understood that each of the programs 211, 213, 215, 219 comprising the profiler may comprise a suite of programs.

In addition, the profiler 200 may include one or more knowledge bases KB, KB2 which store fuzzy information relating to a plurality of methods. The knowledge base(s) KB, KB2 may be located on, or remote from, the server computer 20.

*First embodiment*

The following sections describe the functionality of the programs making up the profiler 200 for the specific example of data analysis.

Capturing program 211

The capturing program 211 manages an interactive dialogue session with the user at the client computer 10, in order to capture user requirements.

The capturing program 211 could be a Java applet running inside a browser, or a plain Hyper-Text Markup Language (HTML) form downloaded from a server computer (not necessarily the server computer 20) to the client computer 10. As an alternative to running an application within, or in operative association with, a web browser, the capturing program 211 could comprise a stand-alone program that either uses a communication protocol or uses Remote Method Invocation (where the client executes methods inside the server by calls over the network) to exchange information with a corresponding program (not shown) running on the server computer 20. In the latter case the capturing program 211 would include conventional text fields, lists, radio buttons etc. that are designed to enable a user to input requisite data, and would send data input by the user to the server upon completion of the said data input.

User requirements include type of data analysis method and user preferences. A user preference is an instance of a user characteristic; an example of a user characteristic is *simplicity,* and an instance of the user characteristic, or a user preference, is *high* level of *simplicity*. User preferences, such as *high*, can also be represented using fuzzy sets, as is described below.

The capturing program 211 could take many forms, as would be appreciated by one skilled in the art. The following passage shows one example of processes invoked by the capturing program 211 in an attempt to capture user requirements. The example relates to test result from cancer patients, where, for each patient there are nine results (i.e. cancer attributes, such as clump thickness, uniformity of cell size, uniformity of cell shape etc.) each having possible integer values between 1 and 10, and each case has been pre-classified as being benign or malignant. It is to be understood that the capturing program 211 is not limited to the processes described in this specific example.

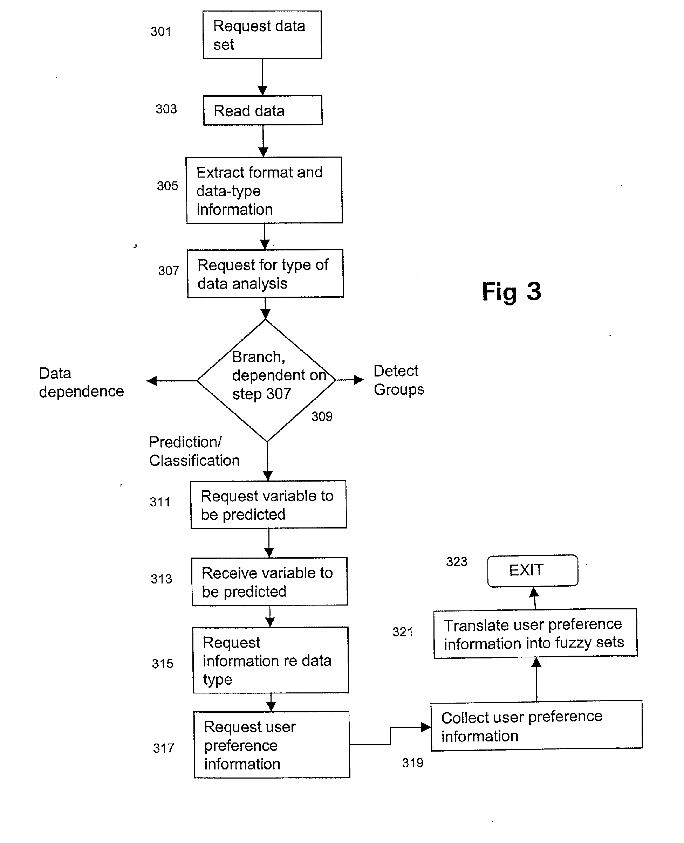

For the purposes of this example it is assumed that the capturing program 211 is an applet that has, for example, been downloaded from the server computer 20, as shown schematically in Figure 2. Referring to Figure 3, the capturing program 211 firstly requests 301 the user to input a data set, whereupon the user duly submits the data.

The capturing program 211 reads 303 in the data, and applies 305 standard techniques to extract format and data type information from the data, in order to identify variables present in the data. If the data is input in the form of a data file, these techniques include searching for white spaces, commas, semi-colons etc. so as to identify a number of variables within the data set (here 10), identifying data types (i.e. integer, real, string) for each of the variables, and identifying any missing values within the data set. An example of identifying data types includes reading a value as a string and trying to transform it into a specific data type. Typically the most specific data type is tried first, followed by the more general ones. A typical sequence is: date/time, boolean, integer, double. If all of the transformations fail, the value is considered to be a string.

Having completed an initial analysis of the data set (step 305), the capturing program 211 asks 307 the user to select a type of data analysis for the data set. This can be performed in many different ways, such as asking the user to explicitly enter a data analysis type. Alternatively, the capturing program 211 may present the user with a series of options, such as:

> A) Predict the value of one or several variables from the remaining other variables (prediction, approximation, classification)
> B) Detect groups within the data (cluster analysis)
> C) Describe dependencies within the data (association rules, probabilistic models)

However the user specifies the type of analysis, and dependent on the type so specified, the capturing program 211 then branches 309 into one of several processes. Assuming (for the purposes of this example) the user selects option (A), the capturing program 211 then asks 311 the user to select, from one of the variables identified at step 305, a variable to be predicted. Assuming the user selects variable 10 (diagnosis, say) the capturing program 211 receives 313 this selected variable, and then queries 315 the user regarding the nature of the variables identified at step 305.

The capturing program 211 then asks 317 the user to select (or specify) instances of user characteristics, by, for example, presenting the user with a matrix of user characteristics, and allowing the user to select an instance thereof. An example of such a matrix, as completed by a user, is shown in Table 1:

TABLE 1

| USER CHARACTERISTICS | Instance of user characteristic | | |
|---|---|---|---|
| | *High* | *Low* | *Medium* |
| user friendliness | X | | |
| interpretability | X | | |
| simplicity | X | | |
| accuracy | | | X |
| speed | | X | |
| maintainability | | X | |
| robustness | X | | |

Once user preference information has been collected 319, the capturing program 211 may translate 321 the user preference information into fuzzy sets. For example, *high* is a fuzzy set, which is represented by a membership function over an artificial scale of 0 to 100. Example membership functions for *high* could start at 50 with membership degree 0.0, reach membership degree 1.0 at 75 and remain at 1.0 until it reaches 100. In other words, the membership function for *high* can be described by three characteristic points, which are connected by straight lines: (50, 0.0); (75, 1.0); (100, 1.0). The fuzzy set *medium* is represented as (25, 0.0), (50, 1.0), (75, 0.0); and the fuzzy set *low* is represented as (0, 0.0), (25, 1.0), (50, 0.0). It will be understood by one skilled in the art that a fuzzy set could be specified in many alternative formats, for example by two, or four characteristic points, or by a parameterised function.

The capturing program 211 then exits 323.

In general, therefore, the capturing program 211 collects at least some of the following information: type of data analysis (in this example prediction); type of data to be analysed (in this example integer); and user preferences in terms of type of data analysis. Other information, such as identification of variable to be predicted is dependent on user selection (steps 309, 311), and will vary from example to example.

This information is then used to identify one or more suitable data analysis methods. This process can be carried out by the identifying program 213 referred to above, and described in more detail below:

Identifying program 213

The identifying program 213 receives, as input, information describing the type of data analysis required by the user (e.g. predictive, classification, clustering etc.), together with the user's preferences (e.g. *very simple, highly accurate* etc., which has already been, or can be, translated e.g. into fuzzy logic sets). This input is typically received from the capturing program 211.

The identifying program 213 is operable to identify, by application of predetermined fuzzy rules, or equivalent, analysis methods (also referred to as models) having characteristics that meet the user's preferences. These rules are stored in the knowledge base KB, and map user characteristic to model characteristic as shown in the following examples:

*Rule format:*
**IF** [instance of user characteristic] **then** [instance of model characteristic]
e.g. RULE TYPE: SIMPLICITY
**If** *simplicity* is *high* **then** *no of parameters* is *low*
**If** *simplicity* is *high* **then** *skill required* is *low*

These rules are based on the relationships shown in Table 2, which shows a mapping between model characteristics and user characteristics. For example, referring to Table 2, there will be rules relating user friendliness, interpretability, simplicity, accuracy and speed to number of parameters.

TABLE 2:

| Mapping between model characteristics and user characteristics | |
|---|---|
| **MODEL CHARACTERISTICS** | **USER CHARACTERISTICS** |
| Number of parameters | user friendliness, interpretability, simplicity, accuracy, speed |
| Skill required | simplicity, maintainability |
| Level of user interaction | user friendliness, interpretability |
| Adaptability | accuracy, speed, robustness, maintainability |
| Customisability | interpretability, maintainability |
| Modelling capability | Robustness |
| Data required | Speed |
| Prior knowledge required | Interpretability |

Essentially these rules are used to translate user preferences, which, as described above, are themselves represented as fuzzy sets, into fuzzy sets for the model characteristics. The identifying program 213 then compares the said model characteristic fuzzy sets with fuzzy sets representative of actual data analysis methods (shown in Table 3), so as to identify one or more data analysis methods that satisfy the user preferences.

TABLE 3:

| Mapping between model characteristics and methods | | | | | | |
|---|---|---|---|---|---|---|
| **MODEL CHARAC'T IX** | **DATA ANALYSIS METHODS** | | | | | |
| | **Neural Network** | | **Linear Regression** | | **Neuro-fuzzy** | |
| | Natural Language | Fuzzy set | Natural Language | Fuzzy set | Natural Language | Fuzzy set |
| Number of parameters | *high* | (50, 0.0); (75, 1.0); (100, 1.0) | *low* | (0, 1.0); (25, 1.0); (50, 0.0) | *medium* | (25, 0.0); (50, 1.0); (75, 0.0) |
| Skill required | expert | (50, 0.0); (75, 1.0); (100, 1.0) | novice | (0, 1.0); (25, 1.0); (50, 0.0) | casual | (25, 0.0); (50, 1.0); (75, 0.0) |
| Level of user interaction | *moderate* | (25, 0.0); (50, 1.0); (75, 0.0) | *low* | (0, 1.0); (25, 1.0); (50, 0.0) | *moderate* | (25, 0.0); (50, 1.0); (75, 0.0) |
| Adaptabilit y | *moderate* | (25, 0.0); (50, 1.0); (75, 0.0) | *low* | (0, 0.0); (25, 1.0); (50, 1.0) | *high* | (50, 0.0); (75, 1.0); (100, 1.0) |
| Customisa bility | difficult | (0, 1.0) (100, 0.0) | *none* possible | (0, 1.0) | easy | (0, 0.0) (100, 1.0) |
| Modelling capability | universal | (0, 0.0) (100, 1.0) | restricted | (0, 1.0) (100, 0.0) | universal | (0, 0.0) (100, 1.0) |
| Data required | lots | (0, 0.0) (100, 1.0) | little | (0, 1.0) (100, 0.0) | lots | (0, 0.0) (100, 1.0) |
| Prior knowledge required | prior knowledge impossible | (0, 1.0) (100, 0.0) | prior knowledge impossible | (0, 1.0) (100, 0.0) | prior knowledge possible | (0, 0.0) (100, 1.0) |

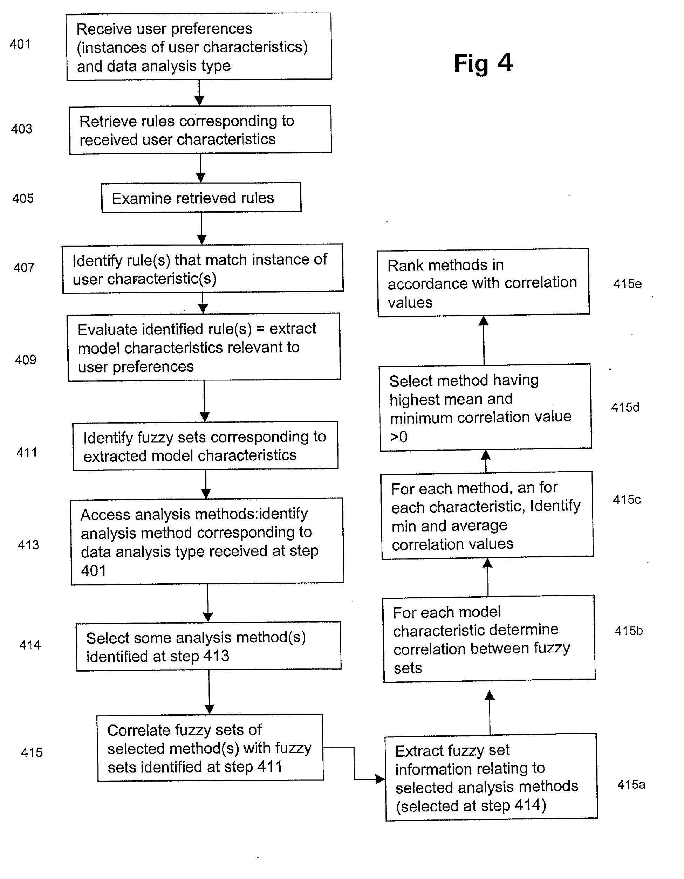

The functionality of the identifying program 213 is best described by means of an example. Referring to Figure 4, the identifying program 213 receives 401 user preferences and data analysis type via the capturing program 211. The identifying program 213 then retrieves 403 rules corresponding to user characteristic(s) for which there is a user preference. For the purposes of the present example it is assumed that the user has input a single user preference, of *high simplicity*, and a predictive data analysis type, so that the identifying program 213 retrieves rules corresponding to the user characteristic *simplicity* at step 403.

The identifying program 213 then examines 405 the simplicity-type rules, and, by examination of the antecedent part of the rules, identifies 407 one or more rules that match the level of simplicity specified by the user (*high*) to a degree larger than zero.

Having identified, at step 407, one or more rules corresponding to the user preference, the identifying program 213 evaluates 409 the identified rules. This identifies an instance of, or fuzzy sets corresponding to, one or more model characteristics. In this example there are two rules, and two model characteristics. The first model characteristic is number of parameters, for which the instance is *low* (i.e. has a membership function that can be described by three characteristic points, which are connected by straight lines: (0, 0.0); (25, 1.0); (50, 0.0)). The second model characteristic is skill required, for which the instance is *novice* (i.e. has a membership function that can be described by three characteristic points, which are connected by straight lines: (0, 1.0); (25, 1.0); (50, 0.0)).

The identifying program 213 thus identifies 411 as many fuzzy membership sets as number of model characteristics extracted at step 409 (which in this case is 2).

The identifying program 213 then accesses 413 entries corresponding to at least some analysis methods (e. g. by referring to a look-up table such as Table 4) and identifies 414 methods corresponding to the type of data analysis specified as input from the capturing program 211 at step 401. The knowledge base KB may store this information in the following form:

TABLE 4

| TYPE OF DATA ANALYSIS | Data analysis method |
|---|---|
| Prediction | Neural Network (feedforward), Neuro-Fuzzy, Decision Tree, Linear Regression, Non-linear Regression, Discriminant Analysis, K-Nearest Neighbour, Naive Bayes Classifier, Bayesian Network |
| Clustering | Neural Network (Self-Organising Feature Map), Fuzzy Cluster Analysis, K-Means Clustering |
| Description of Dependencies | Association Rules, Bayesian Network |

Thus if the identifying program 213 receives, at step 401, "prediction" as a type of data analysis, then the identifying program 213 selects 414 all of the methods corresponding to "Prediction".

From the methods selected at step 414, the identifying program 213 then identifies 415 those that have fuzzy membership corresponding to the fuzzy sets identified at step 411 (e.g. by referring to a look-up table such as Table 3). In some embodiments, particularly when there are multiple user preferences, this step 415 involves correlating fuzzy sets of the methods accessed at step 413 with fuzzy sets identified at step 411. (This is described below.)

In the present embodiment, simple pattern matching techniques (including, e.g. inspection) are used to identify those methods that have fuzzy membership corresponding to the fuzzy sets identified at step 411. Referring back to Table 3, it can be seen that the linear regression method and NF methods have *low* number of parameters and require only novice or casual skills, meaning that both of these methods would suit a user input of "simple model".

In most cases, there will be multiple rules relating user characteristics to model characteristics, and the identifying program 213 will receive user preference information relating to multiple user characteristics. Other embodiments of the invention thus may involve more stages than those described above. For example, assume the user preferences comprise the following:

user friendliness = *high;* interpretability = *high;* simplicity = *high*; accuracy = *medium;* speed = *low;* maintainability = *low*; robustness = *high,*

and assume that the knowledge base KB stores, or has access to, the following rules:

**If** *simplicity* is *high* **then** *no of parameters* is *low*      **[R1]**
**If** *accuracy* is *low* and *interpretability* is *high* **then** *prior knowledge* is possible and *model capability* is universal **[R2]**
**If** *maintainability* is *low* **then** *adaptability* is *low* and *no customisation*      **[R3]**

In this example, the identifying program 213 identifies rules R1 and R3 as being relevant to the user preferences at step 407. Rules R1 and R3 provide a complete match with the user preferences. Rule R2 does not match, because the membership functions *high* and *low* for accuracy do not overlap.

Then at step 409 the identifying program 213 evaluates 409 the rules R1 and R3, thereby computing the conclusions of the rules R1, R3. In the present example the conclusions are identical to the consequent part (the "then" part), and model characteristics *no. parameters, adaptability, customisation* are extracted.

Step 411, which identifies degrees of membership of the model characteristics, thus identifies the following three fuzzy sets:

> no of parameters = *low*
> adaptability = *low*
> customisation = *none*

For the identifying program 213 to correlate 415 these fuzzy sets with data analysis methods selected at step 414, the identifying program 213 firstly extracts 415a fuzzy set information relating to these selected data analysis methods. Referring to table 3, the identifying program 213 thus extracts 415a the following information:

TABLE 5

| | Neural Network | Linear Regression | Decision Tree | Neuro-fuzzy |
|---|---|---|---|---|
| FUZZY SETS TO BE MATCHED | | | | |
| no of parameters = *low* (0, 1.0); (25, 1.0); (50, 0.0) | *high* (50, 0.0); (75, 1.0); (100, 1.0) | *low* (0, 0.0); (25, 1.0); (50, 1.0) | *medium* (25, 0.0); (50, 1.0); (75, 1.0) | *medium* (25, 0.0); (50, 1.0); (75, 1.0) |
| Adaptability = *low* (0, 1.0); (25, 1.0); (50, 0.0) | *moderate* (25, 0.0); (50, 1.0); (75, 1.0) | *low* (0, 0.0); (25, 1.0); (50, 1.0) | *low* (0, 0.0); (25, 1.0); (50, 1.0) | *high* (50, 0.0); (75, 1.0); (100, 1.0) |
| Customisation = *none* (0.0, 0.0) | *difficult* (0, 1.0) (100, 0.0) | *none* possible (0, 1.0) | *difficult* (0, 1.0) (100, 0.0) | *easy* (0, 0.0) (100, 1.0) |

The identifying program 213 then determines 415b the correlation between the characteristics to be matched and the fuzzy sets corresponding to each of the method types. An equation such as $m = \sup(\min(a(x), b(x)))$, where m is the degree of match, sup identifies a maximum value over a continuum such as a real interval, and a and b are fuzzy sets, could be used to calculate the correlation between the model characteristics. The equation retrieves the highest membership value from the intersection of two fuzzy sets and must be evaluated for all values of the underlying scale (in this case between 0 and 100 in all cases). If the fuzzy sets are identical m = 1.0; if the fuzzy sets do not overlap at all m = 0.0.

TABLE 6

| | Correlation between fuzzy sets | | | |
|---|---|---|---|---|
| | Neural Network | Linear Regression | Decision Tree | Neuro- fuzzy |
| **Model characteristics to be matched** | | | | |
| no of parameters | 0.0 | 1.0 | 0.5 | 0.5 |
| adaptability | 0.5 | 1.0 | 1.0 | 0.0 |
| customisation | 1.0 | 1.0 | 1.0 | 0.0 |

Next the identifying program 213 identifies 415c minimum and average correlation values for each of the methods:

TABLE 7

|  | Neural Network | Linear Regression | Decision Tree | Neuro-fuzzy |
|---|---|---|---|---|
| Min correlation | 0.0 | 1.0 | 0.5 | 0.0 |
| Mean correlation | 0.75 | 1.0 | 0.83 | 0.16 |

and selects 415d whichever method has both the highest mean, and a minimum correlation greater than 0. In the present example the method linear regression would be selected because it has the highest mean and the minimum correlation value is greater than 0 (in fact both values are 1.0, indicating that this method matches user requirements exactly). In addition, the identifying program 213 can rank 415e the methods in accordance with the mean and minimum correlation values. This ranking indicates how well the methods are estimated to match the user requirements.

Once the identifying program 213 has identified one or more data analysis methods, the building program 215 referred to above builds a model in accordance with the identified methods. In the present example, the building program 215 may operate as described below:

Model building program 215

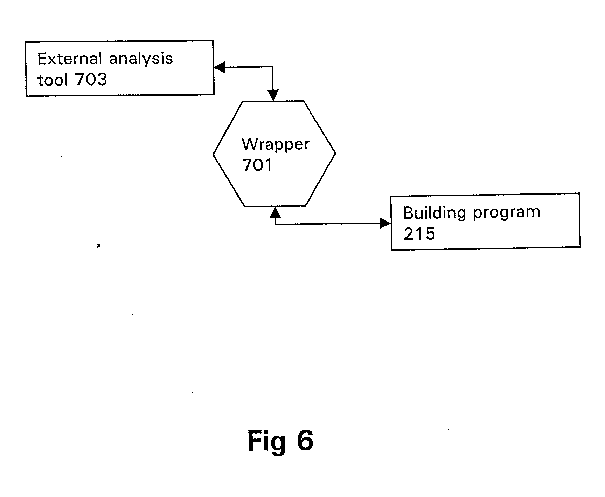

The building program 215 has access to standard, and purpose-built, analysis tools that carry out the identified methods. The building program 215 interoperates with the standard analysis tools via wrappers 701, as shown in Figure 6. As is known in the art, a wrapper 701 is a piece of software that interfaces between an external tool 703 and the building program 215; essentially each wrapper 701 is associated with an external tool and translates information between the building program 215 and its associated tool 703, so that the tool 703 can be executed in accordance with instructions from the building program 215.

As stated above, each tool can carry out a particular data analysis method. For example, in embodiments of the invention the following external tools are utilised:

TABLE 8

| METHOD | DETAILS |
|---|---|
| Decision trees | "DT Package", which is available under the Gnu Public License from the University of Magdeburg, author Christian Borgelt, described in "Attributauswahlmaße für die Induktion von Entscheidungsbäumen: Ein Überblick", Christian Borgelt und Rudolf Kruse.In: Gholamreza Nakhaeizadeh, ed. Data Mining: Theoretische Aspekte und Anwendungen, pp. 77-98. Physica-Verlag, Heidelberg, Germany 1998. The software is available (for downloading) from http://fuzzy.cs.Uni-Magdeburg.de/~borgelt/software.html |
| Neuro-fuzzy methods | • NEFCLASS: "Obtaining Interpretable Fuzzy Classification Rules from Medical Data", Detlef Nauck and Rudolf Kruse, Artificial Intelligence in Medicine, 16:149-169, 1999.<br><br>• NEFPROX: "Neuro-Fuzzy Systems for Function Approximation", Detlef Nauck and Rudolf Kruse, Fuzzy Sets and Systems, 101:261-271, 1999. |
| Statistical Methods | • SPSS "SPSS 10.0 Guide to Data Analysis", Marija J. Norusis, Prentice Hall, 2000, ISBN: 0130292044;<br><br>• Statistica: "Statistica Software", Statsoft, International Thomson Publishers, 1997, ISBN: 0213097732 |

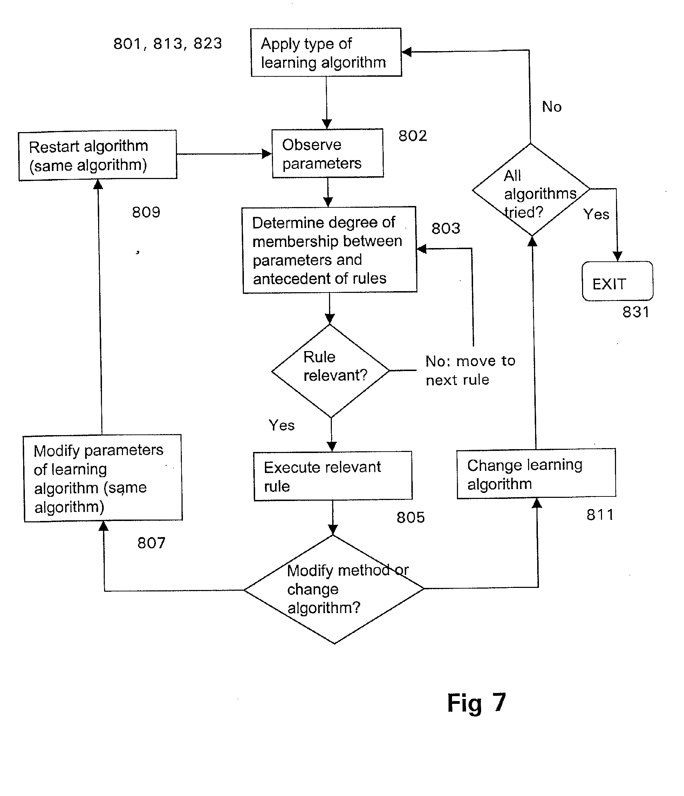

The instructions, which control execution of the tool, are stored in the second knowledge base KB2, and essentially comprise heuristics, in the form of exact and fuzzy rules. These heuristics define the learning process required for model creation. The rules are method-specific, e.g. for Method type NEURAL NETWORK, which is a bespoke tool for generating a neural network, there are three possible learning algorithms: backpropagation (Back-Prop), quickpropagation (QuickProp) and resilient propagation (Rprop), and the selection and processing of the learning algorithms involve the following steps (referring to Figure 7):

Apply Rprop first 801.
If Rprop fails apply QuickProp 813
If QuickProp fails apply BackProp 823
If BackProp fails, then abort 831 neural network generation

During execution of the learning algorithms, the building program 215 observes parameters such as oscillation, error, convergence speed, number of parameters etc. (as they are inherent features of the learning/analysis/model creation algorithms), and compares these against predetermined fuzzy learning rules [RRn], such as:

If the error reaches a *high* local minimum *early,* then repeat the current learning algorithm using *slighly more* hidden units.     **[RR1]**
If the error oscillates *strongly*, then reduce the learning rate *strongly*     **[RR2]**
If the error decreases, then increase the learning rate *slightly*.     **[RR3]**

As illustrated above, typically several algorithms are available for creating the same kind of model. In the present example, that of creating a neural network model, there are three such algorithms: Rprop, QuickProp and BackProp. Each algorithm yields a certain performance feature, so that for example, a first algorithm may have a faster convergence speed than a second algorithm, but it may be prone to oscillations. Thus if a faster learning rate were required, the first algorithm would be selected to build the model. If, however, oscillations occur, it may be necessary to switch to the slower algorithms to avoid oscillations. These algorithms may not only differ in computational complexity, speed of convergence, and ease of parameterisation, but also in the way they ensure certain features appear/evolve in the model they create from data.

Accordingly, during the model learning/creation process, the building program 215 observes 802 at least some of the parameters listed above. Then the building program 215 determines 803 a degree of membership of the parameters to the fuzzy learning sets in the antecedent of the fuzzy learning rules listed above, in order to determine whether the learning rule is relevant, and thus whether a learning rule should be executed. If a learning rule is relevant, the building program 215 executes 805 the said rule.

For example, considering the learning rules listed above, if the fuzzy learning set for error satisfies rule RR1 then the building program 215 changes 807 the number of parameters of the neural network to add more hidden units, and restarts 809 the algorithm. If any of the algorithms fail, the building program 215 changes 811 the algorithm - to apply one of the other learning algorithms.

Considering a second example, a Neuro-fuzzy method, where the first stage is rule learning, the second knowledge base KB2 contains fuzzy learning rules of the following format:

If simplicity is *high* and interpretability is *high,* and number of rules is *high*, then reduce the number of fuzzy sets per variable *slightly* and restart     **[RR4]**

Thus if the building program 215 observes, at step 803, a huge number of rules being created, (i.e. if rule [RR4] is satisfied), then the building program 215 changes 807 the number of fuzzy sets per variable of the neuro-fuzzy model, and restarts 809 the algorithm.

The building program 215 can be arranged to evaluate, during construction of a model, at least some of the model characteristics, and to compare them with fuzzy set(s) generated at step 411.

For example, consider a neuro-fuzzy method under construction. The building program 215 is adapted to evaluate, using one or more predetermined rules, a *number of parameters* for the said model under construction, and to compare the evaluated number with the fuzzy set for *no of parameters* evaluated at step 411. Typically, these predetermined rules would be stored in the second knowledge base KB2, and could have the following form:

$$\text{No parameters} = \frac{\text{number of rules in the neuro - fuzzy model under construction}}{\text{Max no rules}}$$

Max no rules = (Number of fuzzy sets) $^{\text{No variables}}$
e.g. if no variables = 3, and there are 5 fuzzy sets/variable, then
max no rules = $5^3$ = 125;
if the number of rules characterising the neuro-fuzzy method under construction = 32, then
No parameters = 32/125 = 25.6.
This is a non-dimensional number, which maps directly onto the fuzzy set scale [0...100], and thus enables comparison of the actual no parameters for this method under construction (or to be constructed/having been constructed) with the fuzzy set evaluated at step 411.

Monitoring program 219

In the foregoing description, the profiler 200 operates in accordance with the following assumptions:

1. that a user's understanding of a user preference (e.g. *low*) is the same as the data analyser 200 definition of *low*;
2. that instances of user/model characteristics have the same meaning for all users (e.g. fuzzy set for "low" is the same for all users); and
3. that user characteristics map to model characteristics in the same way for all users.

For each preference category (*low, medium, high*) user interpretation of the preference category is likely to be normally distributed around the definitions utilised by the data analyser 200 (e.g. *low* = (0,0.0) (25,1.0) (50,0.0)). Thus, for the majority of users, results that are generated in accordance with the above assumptions are likely to be at least satisfactory.

As stated above, while such results are satisfactory, it is preferable to include means that permit individual definition of these preference categories. Thus the monitoring program 219 uses user feedback to modify the fuzzy set definition of terms *low, medium, high* in accordance with the feedback.

As this modification is user-specific, any modification to the definition of a fuzzy set is stored as a function of the user. A suitable way of storing specific user definitions of the fuzzy sets is via user profiles.

Such feedback may be captured when model results are presented to the user via the capturing program 211. As described above, the capturing program 211 may additionally include means for the user to specify whether or not the model concords with user requirements. This means may be an edit box, or a graphical slide-means, which allows the user to specify whether, for example, the model created is too complex, not sufficiently interpretable, not sufficiently accurate etc.

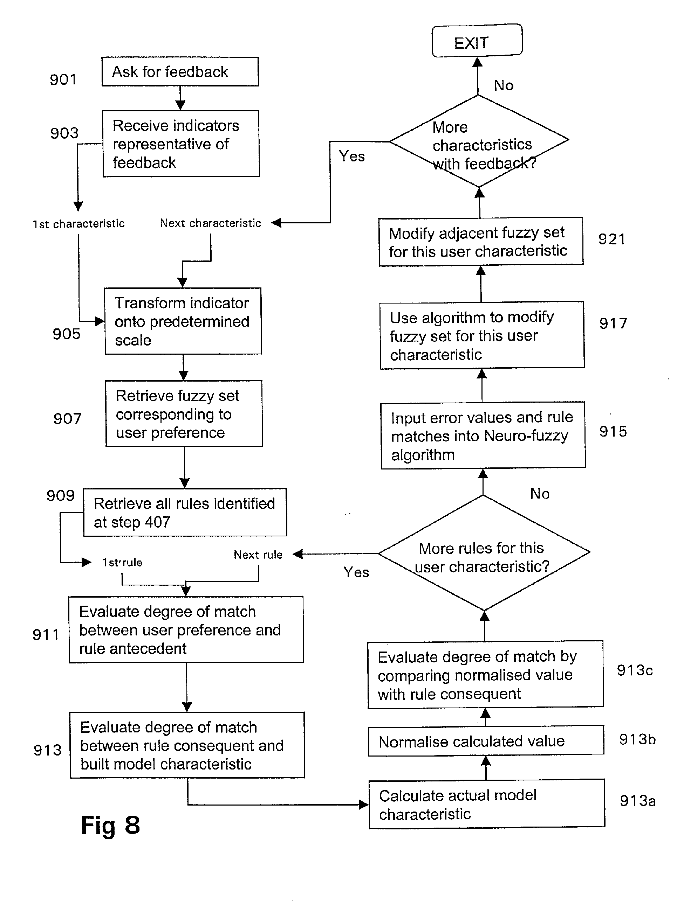

Referring to Figure 8, and in a first embodiment, the monitoring program 219 asks 901 the user for feedback relating to specific user characteristics. Assuming the capturing program 211 includes a graphical slider, the user can move the slider to express how closely the model information (presented by the building program 215, as described above) matches his requirements. For example, for the user characteristic simple, such a slider could be moved between

"*far too simple - too simple - exactly right - too complex - far too complex*"

The monitoring program 219 receives 903 an indicator representative of the user feedback, and transforms 905 the indicator into a number between - 1 and + 1. For example, assuming that the user sets the slider position to "too simple", which means that the user is has some experience with these methods (i.e. what is categorised as being simple to most users is too simple for this user), then at step 905 the monitoring program 219 translates the slider position to a numerical error value of -0.6.

The monitoring program 219 then retrieves 907 the fuzzy set corresponding to the user preference simple, which was collected by the capturing program 211 at step 319, for use in modifying the fuzzy set for *high* (for user characteristic simple). The sign of the error transformed at step 905 indicates whether the fuzzy set should be extended to lower values (negative error values), or towards higher values (positive error values). In the present example, for which the error value is -0.6, this indicates that the fuzzy set for high should be extended towards lower values.

Accordingly the monitoring program 219 retrieves 909 all of the rules identified as step 407, corresponding to user characteristic simple. Recalling the example rules used above, in the context of the identifying program 213:

**If** *simplicity* is *high* **then** *no of parameters* is *low*
**If** *simplicity* is *high* **then** *skill required* is *low*

For each rule, the monitoring program 219 evaluates 911 the degree of match between user preference (*high*) and the rule antecedent (default fuzzy set for *high*). For the sake of this example, we assume that the fuzzy sets have not previously been modified (so that the user definition of fuzzy set for *high* = default fuzzy set for *high)*.

For each rule, the modifying means 219 then evaluates 913 a degree of match between the rule consequent fuzzy sets and the model characteristics of the built model. The steps involved in this evaluation are best illustrated by the example of model characteristic *no parameters:* the number of parameters actually generated for the model built by the building program 215 is calculated 913a (assuming, for the sake of clarity, that only one model is built); the number calculated at step 913a is normalised 913b (as described in the neuro-fuzzy example above); and a degree of match between the evaluated number of parameters and the default fuzzy set for *low* is calculated 913c.

The monitoring program 219 then repeats step 913 (913a, 913b, 913c) for the second rule (relating to model characteristic *skill required*), and calculates a second error value relating to user characteristic simple. The monitoring program 219 then inputs 915 both the error values, both antecedent degrees of match evaluated at step 911 and both degrees of match evaluated at step 913, into a Neuro-fuzzy learning algorithm, and, in a known manner, uses 917 the algorithm to modify the fuzzy set corresponding to *high* for user characteristic simple.

Having modified, at step 917, the fuzzy set corresponding to *high* for the user characteristic simple, the monitoring program 219 modifies 919 the adjacent fuzzy set, (in this case *medium*), to account for any overlap between *high* and *medium.*

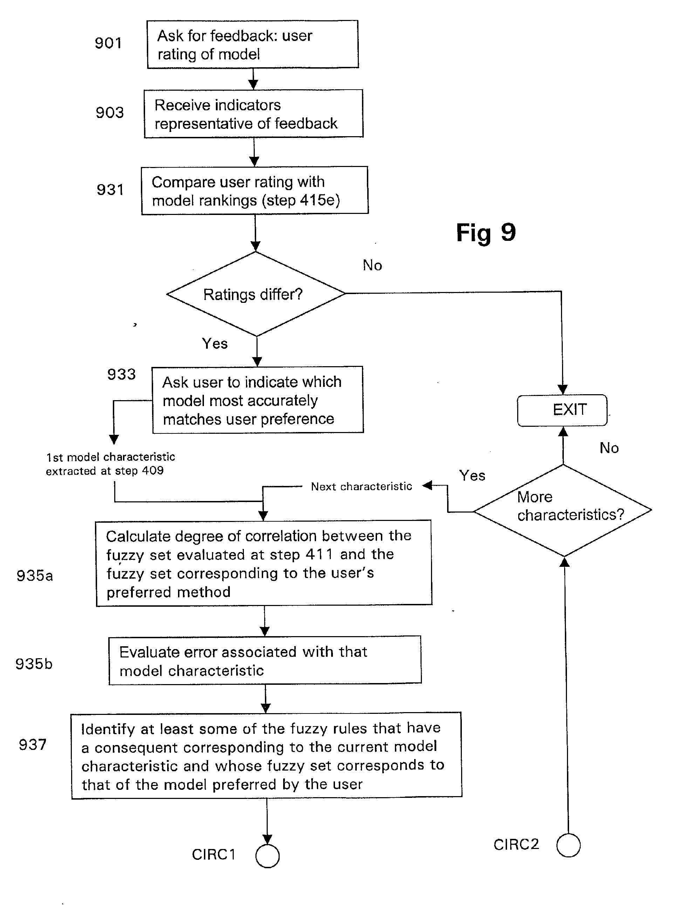

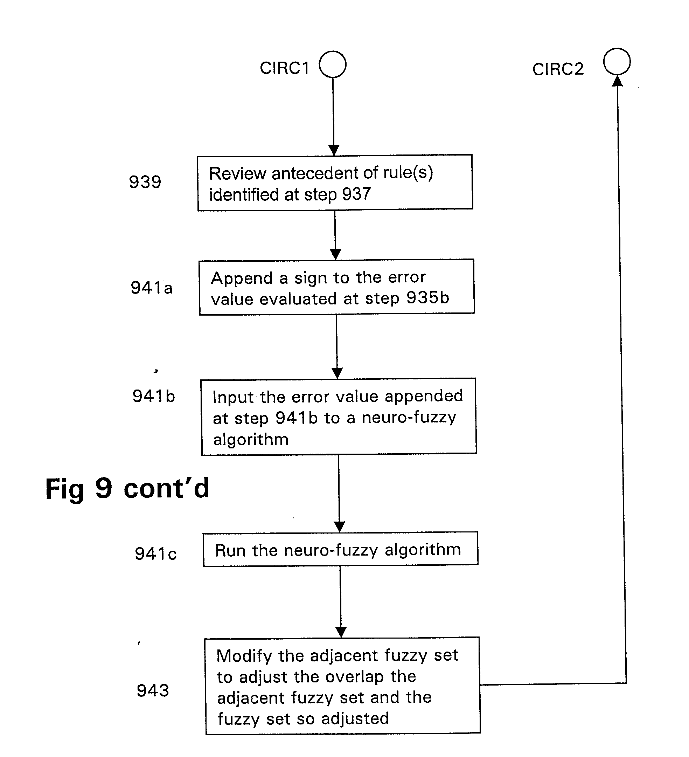

Figure 9 shows a second embodiment wherein fuzzy sets are modified in accordance with user feedback. Figure 9 is spread over two sheets, and connection points are represented as CIRC1 and CIRC2.

Thus referring to Figure 9, in the second embodiment, the monitoring program 219 asks 901 the user to rate the models built by the building program 215. In this embodiment it is assumed that the building program 215 has built more than one model. Upon receipt 903 of the user feedback, the monitoring program 219 compares 931 the user's rating with model rankings generated by the building program 215 at step 415e, as described above.

If the user's ratings differ from those generated by the building program 215, the monitoring program 219 asks 933 the user whether the model with the highest user rating matches the user's "requirements" more closely. If the user replies in the affirmative, the monitoring program 219 performs the following steps:

For each model characteristic extracted at step 409 and evaluated at step 411, an error value is generated based on the difference between the fuzzy sets evaluated at step 411 and the corresponding fuzzy sets of the user's preferred model (to recap, the user's preferred model is indicated by the user in response to the query at step 933).

For example, referring to the example given above (for multiple user preferences), the output of step 411 is:

no of parameters = *low* (0,0.0) (25,1.0) (50,0.0)
adaptability = *low* (0,0.0) (25,1.0) (50,0.0)
customisation = *none*

Assuming the user indicated that he rated the decision tree learning method more highly than the linear regression method (see Tables 5 - 7), then for each of the model characteristics (no parameters, adaptability, customisation), the monitoring program 219 calculates 935a a degree of correlation between the fuzzy set evaluated at step 411 and the fuzzy set corresponding to the user's preferred method. For example, the monitoring program 219 applies the equation $m = \sup(\min(a(x),b(x)))$, where $a(x)$ and $b(x)$ represent the model characteristic fuzzy set evaluated at step 411 and the fuzzy set corresponding to the user's preferred method respectively.

The monitoring program 219 then evaluates 935b the error associated with that model characteristic by subtracting m from 1: error = 1 - m, which, for the above example, yields:

TABLE 9

|  | Fuzzy set evaluated at step 411 | Fuzzy set corresponding to user's preferred method | M | Error |
|---|---|---|---|---|
| **No parameters** | *low*<br>(0,0.0);<br>(25,1.0);<br>(50,0.0) | *Medium*<br>(25, 0.0);<br>(50, 1.0);<br>(75, 1.0) | 0.5 | 0.5 |
| **Adaptability** | low<br>(0,0.0);<br>(25,1.0)<br>(50,0.0) | *Low*<br>(0, 0.0);<br>(25, 1.0);<br>(50, 1.0) | 1.0 | 0 |
| **Customisation** | *none* | *Difficult*<br>(0, 1.0)<br>(100, 0.0) | 1.0 | 0 |

The monitoring program 219 then identifies 937, from the second knowledge base KB2, at least some (preferably all) of the fuzzy rules that have a consequent corresponding to the model characteristics identified at step 411 (no parameters, adaptability, customisation) and whose fuzzy set corresponds to that of the model preferred by the user.

For illustrative purposes application of these steps to a single model characteristic, "number of parameters", will be described. Thus at step 937 the monitoring program 219 attempts to identify all fuzzy rules that have *medium* no parameters in its rule consequent. Assuming that the following rule is stored in the second knowledge base KB2:

If simplicity is *medium* than number of parameter is *medium*        **R5**

then as the consequent of this rule matches the fuzzy set of the user's preferred method for the characteristic "number of parameters", R5 is identified at step 937.

The monitoring program 219 then reviews 939 the antecedent of the rule(s) identified at step 937, and modifies 941 the fuzzy set (here *high*) relating to the user characteristic of the antecedent (here simplicity) in accordance with the user's preferences received at step 319.

In the current example, the user had specified that he preferred simple models, so the user preference is *high.* The fuzzy set corresponding to simplicity in rule R5 is *medium.* Accordingly, at step 941 the monitoring program 219 modifies the fuzzy set for *high,* so that it is more closely related to the fuzzy set for *medium* (which could be the default fuzzy set for medium, or could itself have been modified in accordance with user feedback, as described herein).

This modification can be performed in the following manner: for each non-zero error value evaluated at step 935b (for this example, there is only one: 0.5), the monitoring program 219 appends 941a a sign to the error value by comparing the fuzzy set of the user preference (high) with that of the antecedent of the rule identified at step 937 *(medium);* next, the monitoring program 219 inputs 941b the error value so appended to a neuro-fuzzy algorithm, together with the fuzzy sets for high and medium, and runs 941c the neuro-fuzzy algorithm.

In this way, the neuro-fuzzy algorithm modifies the fuzzy set for *high* in accordance with the degree of error towards the fuzzy set specified in the rule R5 identified at step 937.

Thus, for the present example, at step 941a the monitoring program 219 appends a negative sign to the error value, because *high* simplicity (the user's requirement) is larger than *medium* simplicity (the antecedent of the identified rule R5). A negative sign means that the fuzzy set for *high* will be decreased towards the fuzzy set of *medium.*

Then at step 941b the monitoring means inputs this error value (-0.5), together with the fuzzy set for high and the fuzzy set for medium, to a neuro-fuzzy algorithm (such as one of those described above), which modifies 941c the fuzzy set *high* simplicity such that *high* is defined by lower values.

Finally the monitoring means 219 modifies 943 the adjacent fuzzy set *medium* to adjust the overlap between *high* and *medium.* Preferably this is done by the neuro-fuzzy learning algorithm.

In at least some embodiments of the invention, evaluation of fuzzy rules at step 409 will be based on fuzzy sets stored in the user's user profile. Thus when a user states that he wants a model that is simple (i.e. *highly* simple), the identifying program 213 will access his user profile to retrieve the fuzzy set corresponding to *high* for the user characteristic simple. Then, at steps 415a, 415b, where the identifying program 213 evaluates correlation between fuzzy sets of user characteristics and fuzzy sets of model characteristics, the identifying program 213 utilises the user specific fuzzy definitions.

This can be illustrated by means of an example: assume, as above, that the user wants a "simple" model and that his idea of "simple" is different from the default definition of simple in the rule. Specifically the user has some experience in data analysis and thus considers slightly more complex models to be "simple". Assume that the *high* fuzzy set for user characteristic simple has accordingly been modified (step 917) and is now defined as (40, 0.0); (50; 1.0); (100, 1.0).

Assume that at step 407, the following rule has been identified

**If** *simplicity* is *high* **then** *no of parameters* is *low*      **[R1]**

Step 409, which involves evaluating rules relevant to user preferences, additionally involves matching 409a (step not shown) the default definition of *high* with the user's definition of *high.* Preferably the equation m = sup(min(a (x), b(x))), where m is the degree of match, and a and b are the default and user-specified fuzzy sets respectively, is applied. In this example m = 1.0, meaning that the identified rule is completely applicable. (i.e. the result would be the same if the user's idea of simple was the default definition). If the degree of match were less than 1.0, the conclusion of rule R1 would be capped in accordance with the reduced degree of match.

*Proactive recitation of user preferences*

In addition to saving user-specific definitions of fuzzy sets in the user profile, the monitoring program 219 is operable to store user preferences captured by the capturing program 211. The monitoring program 219 is additionally operable to evaluate the user's most frequently selected user preferences, and to save these in the user profile.

In a first embodiment, and as described above in the context of the capturing program 211, the user enters his preferences manually. In other embodiments, the capturing program 211 can retrieve, from the user profile, the user's most frequently selected preferences, and present these to the user proactively.

Referring to Figure 3, step 317, of requesting user preferences, could comprise asking the user the following question:

*Your current user profile shows that you prefer interpretable, simple and fast models. Do you want to change the preferences for this analysis?*

Should the user reply in the affirmative, the capturing program 211 is adapted to request 318 (step not shown) fresh user preferences, and receive them as described above, at step 319.

*Third embodiment*

The following sections describe the functionality of the programs making up the profiler 200 for the specific example of database querying. Parts that are similar to those described above for the first embodiment have like numerals and are generally not described in further detail.

In this embodiment the profiler 200 is not being used to improve match between user preferences and data analysis methods, but is being used to identify items in a database that more closely match the user requirements. In the following description it is assumed that the database either includes fuzzy set entries, or is in operative association with a process that takes database entries and translates the entries into fuzzy sets (using, for example, the method described above for translating a discrete number of parameters into a fuzzy set).

Thus referring to Figure 3, the capturing program 211 only requests 301 the user to specify a subject of interest (for which data is to be retrieved from the database), and then, at step 317, to request the user to specify preferences relating to that subject.

For example, suppose the user inputs "restaurants" as a subject of interest, and the following preference information relating thereto:

| USER CHARACTERISTICS | Instance of user characteristic | | |
|---|---|---|---|
| | *High* | *Low* | *Medium* |
| expense | X | | |
| proximity to centre | X | | |
| opening hours (high = late) | X | | |

This is collected at step 319 and translated into fuzzy sets, as described above, at step 321.

The identifying program 213 then connects to the database, in a manner known to those skilled in the art, and identifies database entries relating to the user characteristics expense, proximity, opening hours etc. The identifying program 213 then retrieves fuzzy sets corresponding to these entries, and identifies, using the method described above (step 415b in the first and second embodiments), restaurants that match the user preferences received at step 319.

The monitoring program 219 then presents the identified restaurants to the user, as described above at step 901, and asks the user to rank the restaurants. The monitoring program 219 then proceeds to process the information as described above with reference to the second embodiment Figure 9, thereby modifying fuzzy sets for *high* to match more closely the user's perception of, say, an expensive restaurant, or a restaurant that opens late etc.

*Other Embodiments:*

The profiler 200 could be applied to retail scenarios, such as shopping, where user perceptions of characteristics such as *high* and *low* quality, *highly* and *mildly* fashionable, *high* and *low* durability etc., would be expected to vary between users, and indeed between product types.

The capturing program 211 would capture user product requirements, including type of product and user preferences in respect of those products.

In retail embodiments, the knowledge base KB would be expected to store rules relating user characteristics (quality, fashion, durability etc) to product characteristics such as country of origin, delivery lead times, suppliers, trademarks, etc. For example, a rule of the following form:

If quality is *high* then supplier is *dependable*

could be stored in the knowledge base KB.

The functionality of the identifying means 213 described in the first embodiment would similarly apply in this embodiment, as selection of a product is dependent on selection of such fuzzy rules (steps 407, 409). In addition, the products themselves will be rated in accordance with the product characteristics, as described above for model characteristics with reference to Table 5, so that steps 411, 413, 415a, 415b, 415c and 415d will similarly be performed to identify products that match the user's preferences most closely.

Thus for these embodiments a table, similar to that presented in Table 5, would be stored in the knowledge base KB, detailing product characteristics for each product listed therein.

The products will be ranked, as described above at step 415e, and presented to the user for feedback as described with reference to Figures 9a or 9b. Thus the fuzzy set defining *high* quality, *medium* durability etc. will be modified in accordance with the user's individual perception of the goods and how they relate to user characteristics.

**Claims**

1.  A method of modifying a definition of a term for use in selection of items, the term being defined over a range of values, the method comprising the steps of

    (i) selecting two or more items that match the term;
    (ii) receiving an indicator representative of which of the selected items is a best match with a prespecified requirement; and
    (iii) modifying the range of values in accordance with at least one aspect of the best match item.

2.  A method according to claim 1, further including the steps of, for each of the selected items, evaluating a match between the range of values in the term and the range of values in a corresponding term of the selected items, and ranking the selected items in accordance with the evaluated match.

3.  A method according to claim 2, including identifying whether an item other than that ranked highest is a better match with the prespecified requirement, and modifying the range of values in accordance with at least one aspect of the identified best match item.

4.  A method according to claim 3, in which the step of modifying the range of values includes the steps of:

    (i) comparing the range of values of the term with the range of values in the corresponding term of the identified best match item in order to evaluate an error value; and
    (ii) using the error value to modify the range of values in the term.

5.  A method according to claim 1, further including the steps of

    (i) using the range of values in the term to identify one or more rules relating thereto, the rules comprising at least one fuzzy set that relates the term to one or more item parameters;
    (ii) processing the or each identified rule in order to identify instances of item parameters therefrom;
    (iii) comparing the or each instances of item parameters processed from the rule with instances of item parameters associated with selectable items in order to select the said two or more items that match the term;
    (iv) evaluating a degree of match between the term and each of the selected items; and
    (v) ranking the items in accordance with the evaluated match.

6.  A method according to claim 5, including identifying whether an item other than that ranked highest is a better match with the prespecified requirement, and modifying the range of values in accordance with at least one aspect of the identified best match item.

7.  A method according to claim 6, in which the step of modifying the range of values includes the steps of:

    (i) comparing the item parameters associated with the indicated best match item with the item parameters associated with the item ranked highest according to the evaluated match in order to evaluate an error value;
    (ii) inputting the error value and the identified rule to an adjustment algorithm to modify the range of values in the term.

Server computer 20

NW1

1201 Processes

Receiving means 1203

Means for performing selected
analysis method 1205

Means for summarising info 1207

Means for sending summarised
info to client 1209

101 Interface:

Data analysis selecting
means 103

Specifying means 105

Presenting means 107

Client computer 10

Fig 1

EP 1 298 540 A1

Client computer 10

Capturing program 211

KB2

NW1

KB

205 I/O

201 CPU

203 Memory unit

207

209

Operating system programs

211 Capturing program

213 Identifying program

215 Building program

219 Monitoring program

Model Builder 200

Server computer 20

**Fig 2**

301  Request data set

303  Read data

305  Extract format and data-type information

307  Request for type of data analysis

Data dependence

309  Branch, dependent on step 307

Detect Groups

Prediction/ Classification

**Fig 3**

311  Request variable to be predicted

313  Receive variable to be predicted

315  Request information re data type

317  Request user preference information

319  Collect user preference information

321  Translate user preference information into fuzzy sets

323  EXIT

**Fig 4**

401 — Receive user preferences (instances of user characteristics) and data analysis type

403 — Retrieve rules corresponding to received user characteristics

405 — Examine retrieved rules

407 — Identify rule(s) that match instance of user characteristic(s)

409 — Evaluate identified rule(s) = extract model characteristics relevant to user preferences

411 — Identify fuzzy sets corresponding to extracted model characteristics

413 — Access analysis methods:identify analysis method corresponding to data analysis type received at step 401

414 — Select some analysis method(s) identified at step 413

415 — Correlate fuzzy sets of selected method(s) with fuzzy sets identified at step 411

415a — Extract fuzzy set information relating to selected analysis methods (selected at step 414)

415b — For each model characteristic determine correlation between fuzzy sets

415c — For each method, an for each characteristic, Identify min and average correlation values

415d — Select method having highest mean and minimum correlation value >0

415e — Rank methods in accordance with correlation values

# Fuzzy Rules: user characteristics -> model characteristics

**User Characteristics**

**IF part**

**Then part**

**501: Simplicity**

*high*

1.0

0.0

0  25  50  75  100

STEP 407 Identify rules

$m = sup(min(a(x), b(x)))$

**R1: If *simplicity* high then *no parameters* low**

**Simplicity**

*high*

1.0

0.0

0  25  50  75  100

**Number of Parameters**

*low*

1.0

0.0

0  25  50  75  100

STEP 411a: Combine fuzzy sets by maximum operation

**505: Output fuzzy set: Number of parameters**

1.0

0.0

0  25  50  75  100

**output fuzzy set**

STEP 415a: extract fuzzy sets corresponding to NN

**503: Maintainability**

*medium*

1.0

0.0

0  25  50  75  100

STEP 407: Identify rules

**R2: If *maintainability* medium then *no parameters* medium**

**Maintainability**

*medium*

1.0

0.0

0  25  50  75  100

**Number of Parameters**

*medium*

1.0

0.0

0  25  50  75  100

**507: Correlation between no parameters- for a NN**

**Number of Parameters**

*High* (NN)

1.0

0.5

0.0

0  25  50  75  100

**Degree of match: 0.5**

STEP 415b: Correlate output of model characteristics with Neural Network (NN) method

**Fig 5**

External analysis
tool 703

Wrapper
701

Building program
215

# Fig 6

801, 813, 823

Apply type of
learning algorithm

Restart algorithm
(same algorithm)

802

Observe
parameters

809

Determine degree of
membership between
parameters and
antecedent of rules

803

No

All
algorithms
tried?

Yes

EXIT

831

Rule
relevant?

No: move to
next rule

Yes

Modify parameters
of learning
algorithm (same
algorithm)

Execute relevant
rule

Change learning
algorithm

807

805

811

Modify method or
change
algorithm?

Fig 7

23

**901** — Ask for feedback

**903** — Receive indicators representative of feedback

1st characteristic

Next characteristic

**905** — Transform indicator onto predetermined scale

**907** — Retrieve fuzzy set corresponding to user preference

**909** — Retrieve all rules identified at step 407

1st rule

Next rule

**911** — Evaluate degree of match between user preference and rule antecedent

**913** — Evaluate degree of match between rule consequent and built model characteristic

EXIT

No

More characteristics with feedback?

Yes

**921** — Modify adjacent fuzzy set for this user characteristic

**917** — Use algorithm to modify fuzzy set for this user characteristic

**915** — Input error values and rule matches into Neuro-fuzzy algorithm

No

More rules for this user characteristic?

Yes

**913c** — Evaluate degree of match by comparing normalised value with rule consequent

**913b** — Normalise calculated value

**913a** — Calculate actual model characteristic

**Fig 8**

901 | Ask for feedback: user rating of model

903 | Receive indicators representative of feedback

931 | Compare user rating with model rankings (step 415e)

**Fig 9**

Ratings differ? — No → EXIT

Yes

933 | Ask user to indicate which model most accurately matches user preference

1st model characteristic extracted at step 409

Next characteristic ← Yes — More characteristics? — No → EXIT

935a | Calculate degree of correlation between the fuzzy set evaluated at step 411 and the fuzzy set corresponding to the user's preferred method

935b | Evaluate error associated with that model characteristic

937 | Identify at least some of the fuzzy rules that have a consequent corresponding to the current model characteristic and whose fuzzy set corresponds to that of the model preferred by the user

CIRC1

CIRC2

CIRC1 ◯

CIRC2 ◯

939 | Review antecedent of rule(s) identified at step 937

941a | Append a sign to the error value evaluated at step 935b

941b | Input the error value appended at step 941b to a neuro-fuzzy algorithm

# Fig 9 cont'd

941c | Run the neuro-fuzzy algorithm

943 | Modify the adjacent fuzzy set to adjust the overlap the adjacent fuzzy set and the fuzzy set so adjusted

Platform A

Data Set ⟷ File I/O ⟷ Capturing Program 211

**Network NW1**

**Platform B**

Server

API

API — Com. Plug-In

API — Plug-In

Directly Connected Tool

Pre-Processing Program 317

SPSS Statistical Tool & Wrapper 701

**Network NW2**

Platform C

Server Stub

API

API

Plug-In

Identifying Program

213

Platform D

Server Stub

API

API

Plug-In

Building Program

215

**Fig 10**

## EUROPEAN SEARCH REPORT

**European Patent Office**

Application Number

EP 01 30 8260

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | LELESCU A ET AL: "Approximate retrieval from multimedia databases using relevance feedback" STRING PROCESSING AND INFORMATION RETRIEVAL SYMPOSIUM, 1999 AND INTERNATIONAL WORKSHOP ON GROUPWARE CANCUN, MEXICO 22-24 SEPT. 1999, LOS ALAMITOS, CA, USA,IEEE COMPUT. SOC, US, 22 September 1999 (1999-09-22), pages 215-223, XP010353490 ISBN: 0-7695-0268-7 * page 219, column 1, line 18 - page 220, column 2, line 40 * | 1-4 | G06F17/30 G06N7/02 |
| A | MEDASANI S ET AL: "A fuzzy approach to content-based image retrieval" FUZZY SYSTEMS CONFERENCE PROCEEDINGS, 1999. FUZZ-IEEE '99. 1999 IEEE INTERNATIONAL SEOUL, SOUTH KOREA 22-25 AUG. 1999, PISCATAWAY, NJ, USA,IEEE, US, 22 August 1999 (1999-08-22), pages 1251-1260, XP010350791 ISBN: 0-7803-5406-0 * the whole document * | 1 | |
| A | FRIGUI H: "Adaptive image retrieval using the fuzzy integral" NORTH AMERICAN FUZZY INFORMATION, 1999. 18TH INTERNATIONAL CONFERENCE OF THE, NAFIPS NEW YORK, NY, USA 10-12 JUNE 1999, PISCATAWAY, NJ, USA,IEEE, US, 10 June 1999 (1999-06-10), pages 575-579, XP010342957 ISBN: 0-7803-5211-4 * the whole document *  -/-- | 1 | |

| | | |
|---|---|---|
| | | TECHNICAL FIELDS SEARCHED (Int.Cl.7) |
| | | G06F G06N |

The present search report has been drawn up for all claims

| Place of search | Date of completion of the search | Examiner |
|---|---|---|
| THE HAGUE | 9 August 2002 | Szántõ, I |

EPO FORM 1503 03.82 (P04C01)

**European Patent Office**

**EUROPEAN SEARCH REPORT**

Application Number

EP 01 30 8260

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | NAUCK D ET AL: "Obtaining interpretable fuzzy classification rules from medical data" ARTIFICIAL INTELLIGENCE IN MEDICINE, JUNE 1999, ELSEVIER, NETHERLANDS, vol. 16, no. 2, pages 149-169, XP002209444 ISSN: 0933-3657 * the whole document * | 1-7 | |
| D,A | NAUCK D ET AL: "Neuro-fuzzy systems for function approximation" FUZZY SETS AND SYSTEMS, NORTH-HOLLAND, AMSTERDAM, NL, vol. 101, no. 2, 16 January 1999 (1999-01-16), pages 261-271, XP004158428 ISSN: 0165-0114 * the whole document * | 1-7 | |
| | | | **TECHNICAL FIELDS SEARCHED (Int.Cl.7)** |

The present search report has been drawn up for all claims

| Place of search | Date of completion of the search | Examiner |
|---|---|---|
| THE HAGUE | 9 August 2002 | Szántõ, I |

CATEGORY OF CITED DOCUMENTS

X : particularly relevant if taken alone
Y : particularly relevant if combined with another document of the same category
A : technological background
O : non–written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)